# EUROPEAN PATENT SPECIFICATION

(11) **EP 1 614 252 B1**
(45) Date of publication and mention of the grant of the patent: **26.03.2008**
(21) Application number: 03816561.9
(22) Date of filing: 08.08.2003
(51) Int. Cl.: H04L 12/24, H04L 12/28, H04L 12/66

(54) **METHOD AND SYSTEM FOR CENTRALLY ALLOCATING ADDRESSES AND PORT NUMBERS**
VERFAHREN UND SYSTEM ZUR ZENTRALEN ZUWEISUNG VON ADRESSEN UND PORTNUMMERN
PROCEDE ET SYSTEME PERMETTANT D'ATTRIBUER CENTRALEMENT DES ADRESSES ET DES NUMEROS DE POINT D'ACCES

(30) Priority: 01.04.2003 US 459346 P
(43) Date of publication of application: 11.01.2006
(73) Proprietor: TELEFONAKTIEBOLAGET LM ERICSSON (publ), 164 83 Stockholm (SE)
(72) Inventor: LANDFELDT, Björn, Menai, NSW 2234 (AU); SENEVIRATNE, Aruna, Lane Cove, NSW 2066 (AU)
(74) Representative: Hedman, Anders
(86) International application number: PCT/SE2003/001261
(87) International publication number: WO 2004/088923

(56) References cited:
- US-A1- 2002 024 959
- US-B1- 6 353 614

## Description

### TECHNICAL FIELD

The present invention generally relates to network communication and more particularly to the issue of providing connectivity between networks of different address realms.

### BACKGROUND

In network communication, there is a general demand for providing connectivity between different networks, especially when the networks have different address realms. For example, this would normally be the case when a node in a private network wants to connect to a host in a public network. The private network usually has internal addresses that cannot be used outside the network, for privacy reasons or simply because the internal addresses are invalid for use outside the private network. Other examples include connectivity between networks of different public domains, between different private networks and between networks with different address schemes such as IP version 4 and IP version 6.

The demand for network connectivity is a generic issue. However, there is a current situation, which demands resolution in the near future. With the explosive growth of Internet Protocol (IP) networks such as the Internet, intranets and other networks, the limited IP address space offered by the current version of the IP protocol, IPv4, becomes a real challenge. With a 32-bit address field, it is possible to assign 2³² different addresses, which are about 4 billion globally unique addresses. The next version of the IP protocol, IPv6, will have a 128-bit address field, thus providing a significantly higher number of globally unique IP addresses. The challenge is that there is a limited number of IPv4 addresses available to the operators for their new networks, and IPv6 is not yet supported by more than a very limited set of nodes within the Internet. Also, a large number of legacy networks including Internet subnets will likely be using IPv4 or older versions of the IP protocol for many years to come.

For mobile or cellular networks, telecom vendors and operators are facing a great challenge deploying support for an expected vast number of IP-enabled mobile terminals in 2.5 and 3G networks. The IPv4 address space is apparently not large enough to cover the needs when a massive deployment of 2.5 and 3G networks takes place within the near future. Today, network operators that apply for address ranges for their new cellular networks receive address spaces far below the expected number of users. The ratio can be as low as a few thousand addresses for an expected customer base of millions of subscribers.

To meet the demand for addresses, telecom vendors are pushing the introduction of IPv6 into terminals as the standard protocol to use within next generation cellular networks. IPv6, fully deployed would naturally solve the address space problem, but unfortunately, IPv6 is not widely deployed in the Internet yet, and it is expected that this deployment will be quite slow, at least in the near future.

IPv6 is not directly compatible with IPv4 and therefore when an IPv6 host wants to communicate with an IPv4 host there will be compatibility problems. The only way an IPv6 host can communicate with a host that only supports IPv4 is by means of in some way using an IPv4 address. Thus, by introducing IPv6 to 3G terminals the address space problem is only partially solved.

This poses a potential serious threat to the successful deployment of 3G networks and their success with customers. It is highly important not to limit access to services and applications used in the Internet to avoid diminishing the appreciation from potential customers.

Since IPv6 is not fully deployed in the Internet, vendors will have to use migration schemes for providing connectivity between different networks.

There are a number of existing schemes for both extending an address realm and for translating between different address realms.

For example, there are a number of existing proposals that make address translations between different address realms. These solutions, all different versions of Network Address Translators (NATs), have in common that hosts in one (e.g. private) address space are temporarily assigned addresses belonging to another (e.g. public) address space. An overview of these different schemes can be found in [1], and a discussion of implementation issues can be found in [2].

The problem with the current proposed NAT schemes is that they all limit service provisioning in some way [1]. Either they scale badly and hence do not solve the problem of the limited address space or they do not allow communication to be initiated both to and from 3G hosts or they require deployment of specific software modules called Application Level Gateways (ALGs).

The ALGs are modules that reside in the network and that parse the payload in IP packets and rewrites application level information to reflect the NAT functionality. Even though ALGs are available for some applications, primarily for use with firewall software on LINUX platforms, they are impossible to deploy and maintain in an operator environment simply because no one can assume responsibility for these modules. In a 3G network, the NATs would typically be manufactured and provided by telecom vendors. This hardware and software environment will be highly specialized and there will be little or no correlation between platforms from different vendors. Therefore, ALGs will have to be developed for each platform.

It is highly unlikely that the application developers will have the required skills or be willing to perform this development and maintain distribution of version upgrades as application versions change the ALG's operation. Similarly, the equipment vendors cannot muster the necessary resources to scan the Internet for all new software that is released and either obtain specifications or reverse engineer applications in order to build ALGs for their own equipment and keep up with software revisions. Finally, the operators and ISPs (Internet Service Providers) will not want to create huge development organizations to take on this task instead of buying functioning concepts from vendors and concentrate on their core business.

Realm Specific IP (RSIP) takes a different approach than NAT to provide connectivity between different realms [3, 4]. RSIP uses a special node that is aware of the different realms and can distinguish between the two. In general terms, RSIP uses two entities, a RSIP server and a RSIP client. The RSIP server is present in both realms and can provide router functionality between the realms. It can also be the node assigning public addresses to private hosts. The RSIP client is a node within the private realm that can temporarily use a public address when communicating with public hosts. Hence, RSIP makes use of public addresses for both parties when communicating between the private and public realms, and does not perform any address translation. An advantage of RSIP is that there is no need to deploy ALGs for applications since public realm addresses are used even for private clients. However, plain RSIP does not allow public-realm initiated connections. For example, Realm Specific Address and Port IP (RSAP-IP) cannot handle public-realm initiated communication, since port translation is required. RSAP-IP temporarily assigns a free port on the RSIP server to each private realm client that wants to communicate with the public realm. Since there is no correlation between the temporarily assigned port and the port on which the private client would listen for connection requests and there is no mechanism for distributing information to public realm hosts about any legacy port numbers corresponding to specific services, it is impossible for the public realm hosts to connect to the correct port on the RSIP server.

A novel approach, called REBEKAH-IP, builds on two earlier proposals RSIP and bidirectional NAT, and adds additional extensions for satisfying three demands, scalability, avoiding using ALGs and allowing private-realm initiated communication as well as public-realm initiated communication [5, 6]. This solution is also subject of our co-pending US Provisional Patent Application 60/370,812 and corresponding International Patent Application PCT/US03/09834. However, the REBEKAH-IP solution shows the undesirable property of possible irresolvable ambiguities and connection blocking.

There is also ongoing work at Columbia University [7] with a scheme that encapsulates IP addresses in a new header format. However, this scheme requires all hosts in the Internet to be upgraded which is not a feasible solution.

US Patent 6,353,614 describes a method and protocol for Distributed Network Address Translation (DNAT). DNAT is used with small office or home office networks that have multiple network devices using a common network address to communicate with an external network. The protocol includes a port allocation protocol to allocate globally unique ports to network devices on the local small or home office network. The globally unique ports are used in a combination network address with the common external network address to identify multiple network devices on a local network to an external network.

### SUMMARY OF THE INVENTION

The present invention overcomes these and other drawbacks of the prior art arrangements.

It is a general object of the invention to provide an improved scheme for supporting connectivity between networks of different address realms.

It is particularly important to minimize connection blocking. It is important to provide enhanced scalability, for example to enable support of a large number of private nodes by means of a limited number of available public addresses. In other words, it is desirable to improve the multiplexation characteristics of an intermediate communication gateway.

It is an object of the invention to provide an improved method and system for enabling establishment of a connection between different address realms, generally referred to as an outside address realm and an inside address realm, through an intermediate communication gateway.

Yet another object of the invention is to provide a gateway resource manager for supporting minimized connection blocking and/or enhanced scalability.

Still another object of the invention is to provide a communication terminal that supports improved connectivity between networks of different address realms.

It is also an object of the invention to provide an improved method of configuring an inside-realm communication node.

These and other objects are met by the invention as defined by the accompanying patent claims.

The invention generally concerns the issue of providing connectivity between different address realms, generally referred to as an inside realm and an outside realm. When an application, generally referred to as a process, in an inside-realm node wants to communicate with another process in an outside-realm node, it opens a communication port often referred to as a socket, which includes parameters such as source address and port, and destination address and port. The addresses identify the communication network interfaces of the nodes and the port numbers identify the processes in the nodes, keeping in mind that a given node may have a plurality of simultaneously communicating processes. In the prior art, including the REBEKAH-IP solution, the inside-realm nodes themselves select, randomly and independently of each other, port number for communication with the outside realm. It has been recognized that this prior art approach may lead to connection blocking, since there is a risk that two inside-realm nodes with the same allocated outside-realm address select the same port number for communication to the same outside-realm process, which would result in a collision or clash, forcing the gateway to block one of the connections.

A basic idea according to the present invention is to avoid all addressing ambiguities and let a gateway resource manager or equivalent central entity (a central configuration server) assign not only the address but also which source port number to use for each communication or flow. This means that the focus is shifted from a) assigning addresses to inside-realm nodes to b) centrally addressing distributed processes in the inside-realm nodes. Consequently, at the core we find a centralized port number allocation mechanism, in clear contrast to the prior art arrangements in which the port number information is not known at the time of address assignment.

When an inside-realm node, e.g. a private-realm terminal, wants to connect to an outside-realm node, e.g. a host on the public Internet, the inside-realm node preferably starts by requesting configuration. It is assumed that the connection is to be established through an intermediate gateway, which has a pool of so-called outside-realm gateway addresses for enabling outside-realm representation of inside-realm nodes. In response to the configuration request initiated from the inside-realm node, an outside-realm gateway address and an inside node port number are centrally allocated to the inside-realm node, and establishment of the connection is initiated at least partly based on the allocated address and port number. The allocated address and port number are signaled back to the requesting inside-realm node in a configuration reply, allowing the inside-realm node to configure its communication interface accordingly.

Alternatively, the allocation is centrally initiated without the need for any request from the inside-realm node, e.g. if the gateway system wants to "force" the inside-realm node to open a specific port.

Preferably, the central address and port number allocation is performed by identifying an outside-realm gateway address and an inside node (source) port number that together with predetermined connection information, typically derivable from the configuration request, define a unique socket parameter combination, also referred to as an outside-realm gateway state representation, that has no counterpart in any existing gateway connection state. The predetermined connection information generally includes outside node (destination) address information, e.g. known through a DNS (Domain Name Server) query, and/or outside node (destination) port information, e.g. a well-known standard port number. In this way, the central gateway resource manager will be able to allocate combinations of socket addresses and ports such that collisions are avoided. In particular, all source port numbers for a given outside-realm address can now be used for distinguishing different connections, which is a major advantage compared to prior art solutions.

Although any general signaling protocol/mechanism can be used by the invention, it has been recognized that it may be beneficial to convey the configuration parameters in a special DNS type record or by carefully re-using an existing DNS type record.

The invention offers the following advantages:
- The invention avoids the aggregation that occurs in the prior art when all possible port numbers for a given address are allocated to a single node. Instead, the invention opens up for use of all these port numbers for distinguishing different connections, thus providing support for a much larger number of simultaneous connections compared to the state-of-the-art.
- The invention is fully robust. There is no risk of connection blocking due to addressing ambiguities.
- The invention scales extremely well, since all possible socket parameter combinations have to be in use before connection blocking is experienced. It thus scales linearly towards the theoretical upper bound of the number of supported flows. Even though the theoretical upper bound of 2⁶² is far from that of IPv6 (2¹²⁸), the address space increase from 2³² as in IPv4 should be large enough to cover the industry's need for a considerable time.

Other advantages offered by the present invention will be appreciated upon reading of the below description of the embodiments of the invention.

### BRIEF DESCRIPTION OF THE DRAWINGS

The invention, together with further objects and advantages thereof, will be best understood by reference to the following description taken together with the accompanying drawings, in which:
Fig. 1 illustrates a basic model of an exemplary gateway providing connectivity between an inside-realm network and an outside-realm network;
Fig. 2 is a schematic diagram of an exemplary signaling sequence for inside-realm initiated communication through a relaying style gateway;
Fig. 3 is a schematic flow diagram of a basic exemplary embodiment of the invention;
Fig. 4 is a schematic diagram of an exemplary signaling sequence for inside-realm initiated communication based on centralized source port assignment;
Fig. 5 is a schematic block diagram illustrating an example of a system implementation according to a particular embodiment of the invention;
Fig. 6 is a schematic block diagram illustrating an example of a general system implementation according to another particular embodiment of the invention;
Fig. 7 is a schematic block diagram illustrating an example of a general system implementation according to yet another particular embodiment of the invention;
Fig. 8 is a schematic diagram illustrating a more detailed example of a system implementation according to a preferred embodiment of the invention;
Fig. 9 is an exemplary terminal flow chart according to an exemplary embodiment of the invention; and
Fig. 10 is an exemplary gateway resource manager flow chart according to an exemplary embodiment of the invention.

### DETAILED DESCRIPTION OF EMBODIMENTS OF THE INVENTION

### General overview

In general, there is a demand for providing connectivity between different address realms, more generally referred to as an outside realm and an inside realm. To this end, there is normally provided an intermediate communication gateway, which has been assigned a pool of outside-realm gateway addresses for enabling outside-realm representation of inside-realm nodes. In many practical applications, the inside realm is a private address realm, whereas the outside realm is a public address realm. In other applications, however, the inside realm and the outside realm may both be different private address realms, different public realms or different protocol realms.

In this respect, a public realm network is generally a network having communication nodes together with an associated network address space consisting of globally unique network addresses. A private realm network on the other hand is a network having nodes together with an associated network address space consisting of possibly non-unique network addresses, in the sense that two nodes in different instances of a private realm may be assigned the same network address. It is also possible that the private realm uses a different protocol and or addressing scheme than the public realm. For example, the private realm can use IPv6 addresses and the public realm can use IPv4 addresses. In the context of this invention, it even holds true that two or more nodes within the same private realm can be assigned the same network address, which can also be assigned to other nodes in other networks. However, it holds true that the addressing within a particular realm enables traffic to be delivered within the realm.
A communication gateway is thus generally a network element that is connected to both an inside realm and an outside realm. As previously mentioned, there are different types of gateways, especially substitution style gateways (including e.g. different flavors of NAT) and relaying style gateways (including e.g. different flavors of RSIP). It should also be understood that the overall gateway function may include packet forwarding on any network layer or combination of network layers.

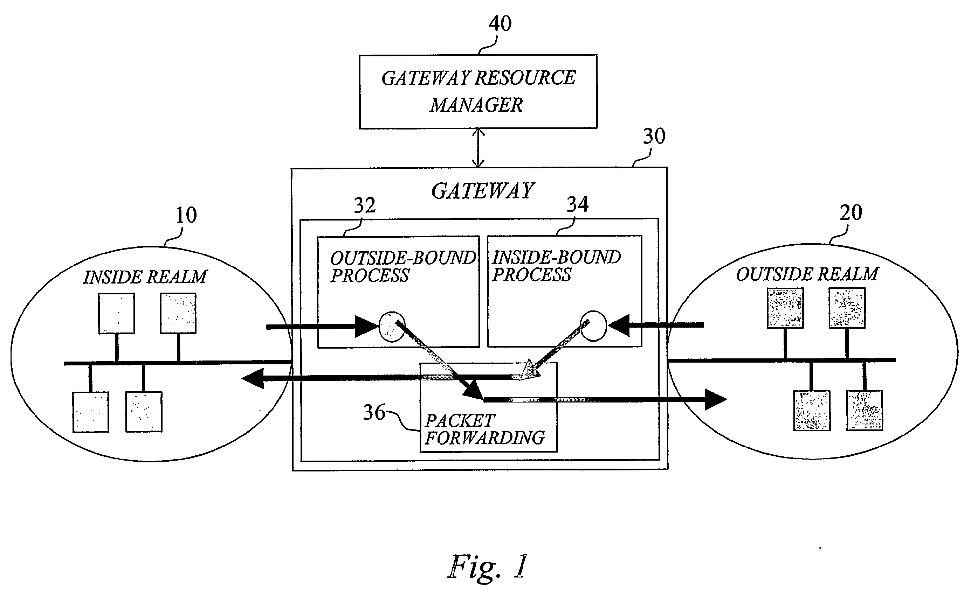

For a better understanding of the invention, it may be useful to begin with a brief introduction of a basic model of an exemplary gateway providing connectivity between an inside realm and an outside realm, referring to Fig. 1.

Fig. 1 illustrates a basic model of an exemplary gateway 30 interconnecting an inside realm 10 and an outside realm 20. The gateway 30 is associated with a gateway resource manager 40, which among other things manages the pool of outside-realm network addresses that have been allocated to the gateway. In the gateway 30, the basic gateway functions are supported by an outside-bound process element 32, an inside-bound process element 34 and a packet-forwarding element 36. The gateway 30 and gateway resource manager 40 may be implemented in separate, but interconnected nodes. Alternatively, the gateway resource manager 40 may be co-located with the gateway 30, even integrated in the gateway. It is also possible with different combinations of distribution of the processes 30 and 40 over different nodes. Furthermore, the outside bound process element 32, the inside bound process element 34, the packet forwarding element 36 and the gateway resource manager 40 can all be implemented in separate processes, a single process, or any combination thereof.

For a relaying style gateway, a gateway connection state is normally defined by an outside n-tuple and a virtual point-to-point interface towards a communication node on the inside realm. In general, an n-tuple is a set of *n* information elements that typically includes: (a source network address, a source port number, a destination network address, a destination port number, and a protocol number). An outside n-tuple is typically an n-tuple with the source and destination network addresses belonging to the outside realm. An example of a virtual point-to-point interface is an IP-in-IP tunnel in which, in the inside-bound direction, a packet is encapsulated in another packet, with the destination address equal to the inside node's private address, and the source address equal to the inside gateway address, and in the outside-bound direction the incoming packet is decapsulated, whereby an inner packet is extracted. In another example, instead of IP encapsulation and decapsulation, there could be a layer 2 point-to-point link between the gateway and the communication node on the inside realm (for example, in a GPRS system, the PDP Context layer). It should be understood that other mechanisms for establishing an inside-realm routing/switching path between the gateway and the inside-realm node can be utilized by the invention. For example, it is possible to employ a shared media interface together with routing or switching mechanisms able to forward traffic to an inside-realm node.

In a relaying style gateway, the two basic processes for enabling proper packet forwarding for communication flows are defined as:
- The inside-bound process, in which each inside-bound packet is matched against the outside n-tuples of the gateway connection states in the gateway, and when finding a matching outside n-tuple, the packet is sent to the virtual point-to-point interface corresponding to the identified outside n-tuple.
- The outside-bound process, in which each outside-bound packet comes in on a virtual point-to-point interface and is forwarded by the gateway to the outside realm.

There may be partially complete gateway connection states, i.e. states which represent connections that currently are in the process of being established, but which have not yet collapsed into a complete gateway connection state for a gateway session. Such partially complete gateway states are sometimes referred to as gateway gates or pinholes.

In a relaying style gateway, a gateway gate is a gateway connection state with an outside n-tuple that has one or more unspecified connection variables. When the gateway receives an inside-bound packet matching the specified values of the partially complete outside n-tuple, that n-tuple is completed in the sense that the up-to-now unspecified values of the partially complete n-tuple are fixed to the corresponding values associated with the packet.

### Problem analysis

The inventors have recognized that although the REBEKAH-IP proposal disclosed in references [5, 6] indeed provides excellent scalability and also allows public-realm initiated communication, there is a risk of addressing collisions that will result in connections being blocked. Even though these collisions are rare, they constitute an undesirable side effect of the otherwise ingenious REBEKAH-IP solution.

In REBEKAH-IP there is a possibility for irresolvable ambiguities to occur when inside-realm (private) nodes initiate communication to outside-realm (public) nodes. If such an ambiguity occurs, the resulting action would be to block some communication attempts. This in turn would have a negative impact on the perceived level of service from the end-users.

In particular, these ambiguities or collisions may occur for inside-realm initiated communication when using relaying or tunneling style gateways based on for example RSIP. When an inside-realm node wants to initiate communication with an outside-realm node, it sends the destination address (or normally the domain name of the destination node) and/or port number in a resource allocation request to the overall gateway function, which then attempts to identify an outside gateway address for the inside-realm node, which in combination with the received destination address and/or port number is unique. If it is assumed, for illustrative reasons, that all gateway addresses in the gateway address pool have been traversed without finding a completely "free" address, it may be necessary to select an outside-realm gateway address that has previously been allocated to another inside-realm node communicating with the very same outside-realm node. The only parameter left to distinguish the two connections would then be the port number for the inside-realm nodes. In the prior art, the port number for an inside-realm node is unknown at the time of the address assignment, and only made known to the gateway later on when the first data packet arrives. Consequently there will be a collision or clash if the two inside-realm nodes happen to select the same port number, which means that the gateway has to block the later of the two connections and request the corresponding inside-realm node to re-open the socket with a new port number.

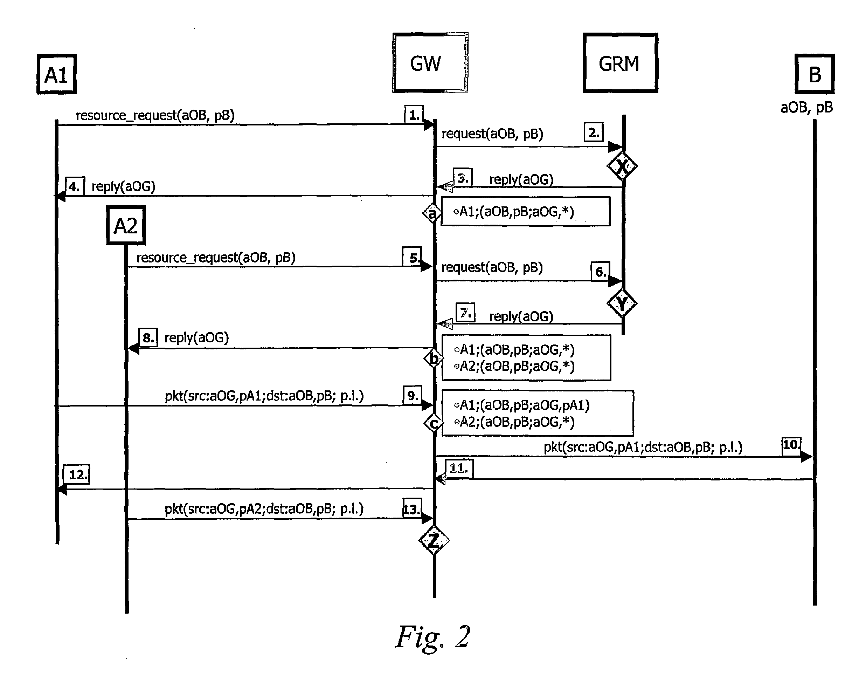

For a detailed understanding of the above chain of events reference is made to Fig. 2, which is a schematic diagram of an exemplary signaling sequence for inside-realm initiated communication through a relaying style gateway.

An exemplary sequence for supporting a communication flow from inside-realm nodes A1 and A2 to outside node B through the gateway could be:
1. Node A1 wants to initiate a communication flow towards node B, which belongs to the outside realm. Node A1 sends a request including the destination network address aOB and destination port number pB to the gateway (GW). In the IETF RSIP framework (RFC3103), this message could be the "ASSIGN_REQUEST_RSA-IP". For the sake of simplicity, it is here assumed that the destination address is already known.
2. The gateway sends a request to the gateway resource manager (GRM).
   In process X, the GRM manager allocates a network address aOG from the gateway address pool.
   The gateway typically supplies the destination address and/or destination port as predetermined connection information to the gateway resource manager. In this example, both destination address information and port information are included in the request. To improve the multiplexing capacity, the gateway resource manager executes an algorithm that given aOB and pB attempts to select aOG so that outside n-tuple (**src:(aOB, pB**); dest:(aOG, *); ...) is not an outside n-tuple of an already existing gateway connection state. If that is not possible (all possible gateway addresses aOG are already used), select the gateway address that is utilized in the least number of gateway connection states.
3. The allocated gateway address aOG is sent back to the gateway.
4. In process a, the gateway creates a new partially complete gateway connection state based on the available connection information. The inside-realm representation is denoted by A1 and represents e.g. a virtual point-to-point link to the inside-realm node A1, whereas the outside n-tuple gets the values: (aOB, pB; aOG, *). The "*" means that this field is for the time being unspecified.
   A reply is sent back to node A1, including the allocated gateway address aOG.
5. Node A2 also wants to initiate a communication flow towards node B, and sends a request including the destination network address aOB and port number pB to the gateway (GW).
6. The gateway sends a corresponding request to the gateway resource manager (GRM).
   In process Y, the GRM manager allocates a network address aOG from the gateway address pool, preferably by using the same algorithm as in process X described above. Assume, for illustrative reasons, that all gateway addresses in the gateway address pool have been traversed without finding a completely "free" address, forcing the resource manager to select the least utilized gateway address. In this example, further assume that the least utilized address is the same address aOG that was previously allocated to node A1.
7. The allocated gateway address aOG is sent back to the gateway.
8. In process b, the gateway creates a further partially complete gateway connection state. The inside-realm representation is denoted by A2 and represents e.g. a virtual point-to-point link to the inside-realm node A2, whereas the outside n-tuple gets the values: (aOB, pB; aOG, *). The "*" means that this field is for the time being unspecified.
   A reply is sent back to node A2, including the allocated gateway address aOG.
9. Node A1 selects a source port pA1 (a so-called ephemeral port) for the communication flow, and sends the first packet. This packet is received by the gateway.
   In process c, the corresponding partially complete outside n-tuple collapses into a complete outside n-tuple (aOB, pB; aOG, pA1), whereby the up-to-now unspecified value in the outside n-tuple is filled-in with the value pA1.
10. The packet is processed by the outside-bound process, and forwarded through the gateway to the outside-realm node B.
11. A reply packet in the communication flow is received by the gateway from node B.
12. The packet is processed by the inside-bound process of the gateway and delivered to node A1.
13. Node A2 selects a source port pA2 (a so-called ephemeral port) for the communication flow, and sends the first packet. This packet is received by the gateway.

In process Z, it is investigated whether pA2 is equal to pA1. If pA2 = pA1, there is a collision and the second partially complete gateway connection state (in box c) should not be collapsed. Instead, the gateway should preferably try to influence node A2 to select another pA2 by resetting the communication flow, e.g. by sending a TCP reset signal.

### Basic exemplary solution

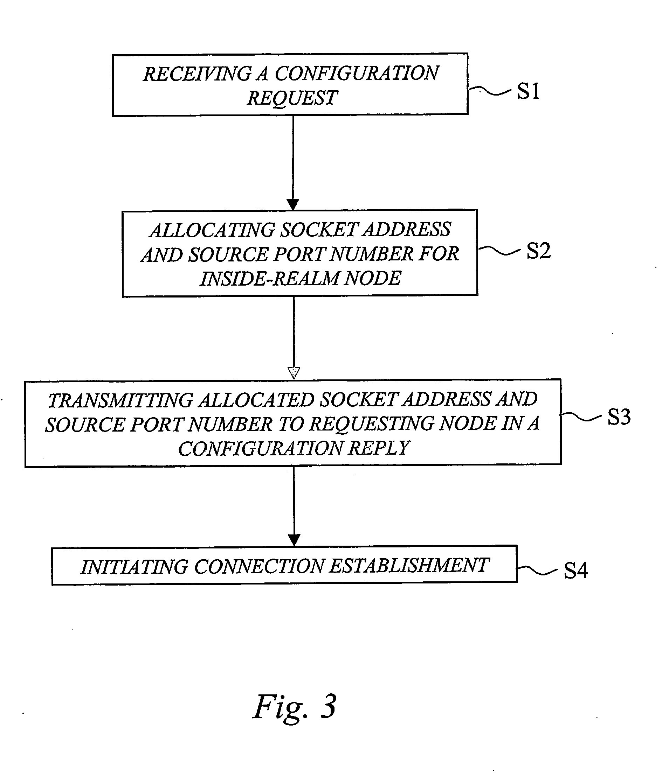

To eliminate this problem, a basic idea according to the invention is to let the configuration server/gateway resource manager assign not only the outside-realm gateway address but also which source port number to use for the communication, thus avoiding all addressing ambiguities for inside-realm initiated communication. This is preferably accomplished in the following illustrative manner, referring to the exemplary flow diagram of Fig. 3. In response to a configuration request (S1) initiated from an inside-realm node that wants to communicate with an outside-realm node, the gateway resource manager uniquely allocates (S2) socket address and source port number to the inside-realm node. At least the allocated socket address and port number are signaled back (S3) to the requesting inside-realm node in a configuration reply, allowing the inside-realm node to configure its communication interface with the allocated socket address and use the allocated port number for the opened socket. The configuration request initiated by the inside-realm node may, if appropriate, be relayed by the gateway and/or a DNS server on its way, and information may be translated/appended to the request.

It is envisaged that the central gateway system may want to force an inside-realm node to open a certain port for communication, without the need for an explicit request from the inside-realm node. In that case, the gateway resource manager itself initiates the central port and address allocation.

The gateway resource manager preferably identifies an outside-realm socket address and a source port number that in combination with predetermined connection information included in and/or derivable from the initial configuration request define a set of socket parameters that has no counterpart in any existing gateway connection state. This unique set of socket parameters, including the allocated socket address and source port number, is generally referred to as an outside-realm gateway state representation, and forms the basis for establishing the new gateway connection state (S4). More particularly, the new gateway connection state is established based on the identified outside-realm gateway state representation, and a corresponding inside-realm gateway state representation such as a virtual point-to-point interface between the gateway and the inside-realm node.

The gateway resource manager should be able to handle both a configuration request including a destination network address such as an IP address as well as a configuration request including a destination name such as a FQDN (Fully Qualified Domain Name). In the latter case, a DNS-query or similar identifier-to-address query may be performed to obtain the destination address to be used by the gateway resource manager in the allocation procedure.

In a typical implementation, the resource manager requests that the gateway establishes the new connection state based on a complete outside-realm representation and a corresponding inside-realm node identifier. Alternatively, the resource manager requests establishment of a partially complete connection state, which is subsequently completed when the inside-realm node has been configured, the virtual point-to-point interface on the inside-realm has been established and the inside-realm node has eventually communicated complementary connection (socket) information to the gateway in the first packet. In the latter case, the destination port number does not even have to be known at the time of allocation of socket address and source port number. The gateway resource manager may still ensure that there will be no collisions even without information of the destination port number by simply not assigning the same source address/port pair to two terminals that want to establish contact with the same destination host. In other words, this corresponds to treating the situation in the same manner as when the destination port number is the same in both configuration requests.

The idea of not only assigning the addresses but also which source port numbers to use for the communication implies that the inventive mechanism in some sense can be regarded as Centrally Assigned Process Addressing (CAPA), since the centralized port assignment in combination with the centralized address assignment pin-points individual processes in the inside-realm nodes.

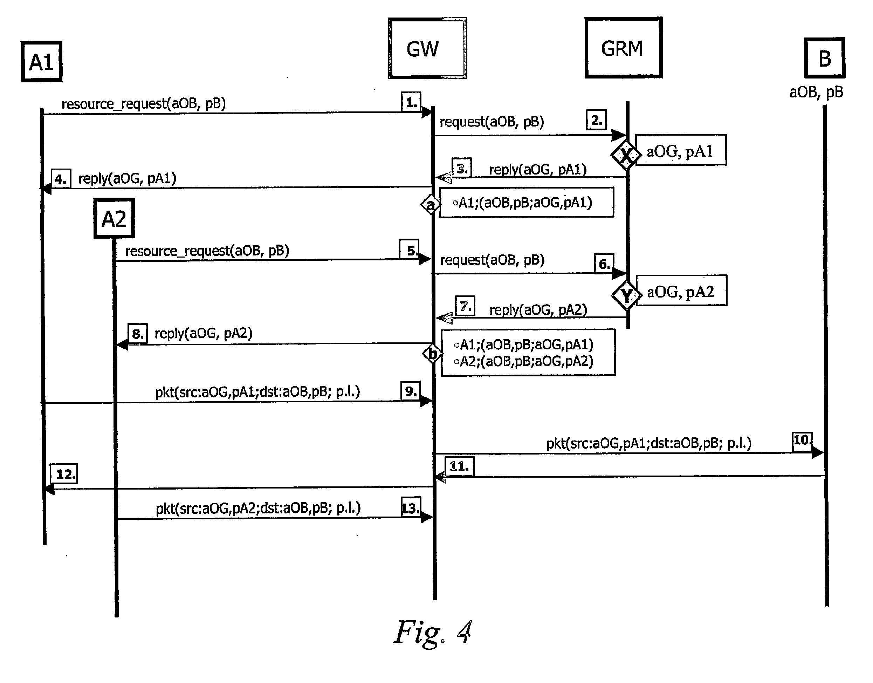

The major changes introduced by the invention in relation to the previously described signaling sequence diagram of Fig. 2 will be appreciated by reference to the exemplary signaling sequence diagram of Fig. 4:

In this example, it is assumed that each inside-realm node already knows the destination network address so that the configuration request already includes predetermined connection information in the form of a destination network address aOB and/or a destination port number pB, typically both a destination address and a destination port number, as illustrated in Fig. 4. It is also assumed that the configuration request is relayed to the gateway resource manager (GRM) via the gateway (GW).
1. A configuration request, also referred to as a resource request, initiated from inside-realm node A1: request (aOB, pB).
2. The gateway (GW) forwards the request to the gateway resource manager (GRM). In process X, the GRM now jointly allocates an outside network address aOG and an inside node port number pA1 based on aOB and pB such that a unique outside n-tuple is defined.
3. The allocated gateway address aOG and port number pA1 are sent back to the gateway: reply (aOG, pA1).
4. A configuration reply is sent back to node A1, including the allocated gateway address aOG and port number pA1: reply (aOG, pA1).
   In process a, the gateway creates a new gateway connection state based on the available connection information. The inside-realm representation is denoted by A1 and represents e.g. a virtual point-to-point link to the inside-realm node A1, whereas the outside n-tuple is defined as: (aOB, pB; aOG, pA1).
5. A configuration request, also referred to as a resource request, initiated from inside-realm node A2: request (aOB, pB).
6. The gateway (GW) forwards the request to the gateway resource manager (GRM). In process Y, the GRM jointly allocates a network address aOG and a port number pA2 based on aOB and pB such that a unique outside n-tuple is defined.
7. The allocated gateway address aOG and port number pA2 are sent back to the gateway: reply (aOG, pA2)
8. A configuration reply is sent back to node A2, including the allocated gateway address aOG and port number pA2: reply (aOG, pA2).
   In process b, the gateway creates a further gateway connection state. The inside-realm representation is denoted by A2 and represents e.g. a virtual point-to-point link to the inside-realm node A2, whereas the outside n-tuple is defined as: (aOB, pB; aOG, pA2).
   Even though A1 and A2 are assigned the same gateway address aOG, it is still possible to distinguish the two connections by means of the different port numbers pA1 and pA2 intelligently assigned by the gateway resource manager.
9. The inside-realm node A1 sends the first packet.
10. The packet is received by the gateway, processed by the outside-bound process and finally forwarded through the gateway to the outside-realm node B.
11. A reply packet in the communication flow is received by the gateway from node B.
12. The reply packet is processed by the inside-bound process of the gateway and delivered to node A1.
13. The inside-realm node A2 sends the first packet.

Provided that both destination address aOB and destination port number pB are known by the gateway resource manager, the step-wise state set-up in the gateway may be eliminated if desired, and hence there is no need for process c any longer.

In a sense, the idea is to jointly allocate, based on predetermined connection information, an outside-realm gateway address and an inside node (source) port number that in combination with the predetermined connection information define an outside n-tuple that has no counterpart in a predetermined set of existing gateway connection states. As previously mentioned, the predetermined connection information typically includes at least one of outside node (destination) address information and outside node (destination) port information. If both the destination address and destination port are included in the predetermined connection information, the outside n-tuple will be complete. Otherwise, it will be partially complete. In the gateway, a gateway connection state is established based on the at least partially complete outside n-tuple. The allocated gateway address and port number are sent back to the requesting inside-realm node in a configuration/allocation reply. After configuration, the inside-realm node can start the actual data packet transmission towards the intended outside-realm node via the intermediate gateway.

### General discussion

For illustrative reasons, consider the following. The port range for an individual host is 2¹⁶ - the first 1024 ports being reserved by the IANA [8]. In a worst case scenario, all private hosts in a network will try to connect to the same public IP address on the same port number (the same process). In this case, the CAPA mechanism will unambiguously allow (2¹⁶ - 1024) x N (the number of available public IPv4 addresses to the GW) simultaneous flows. In the best case scenario, all connections from private hosts will be to separate combinations of public IP addresses and port numbers. In this case, CAPA will unambiguously support (2¹⁶-1024) x N x (2³² - N) x (Z¹⁶ - 1024) simultaneous flows. A simple partial derivative with respect to N to find the maximum yields a theoretical value of ~ 2⁶² simultaneous flows through a single CAPA gateway.

However, this is an unrealistic value since it occurs when a single CAPA gateway has half the IPv4 32 bit address space, but with a more realistic value of 1000 addresses (for a cellular 3G operator for example) the outcome is ~1.8* 10²² simultaneous uniquely distinguishable flows.

Note however that there is a further limitation to the number of flows that can be supported. CAPA is not meant to be a globally permanent solution and already deployed hosts in the public Internet each occupies an IP address. These hosts cannot take advantage of the increased address space as introduced by CAPA. Thus there is a limitation of 2¹⁶*N possible connection for these hosts. For hosts in CAPA domains however, the scalability goes way beyond this limitation.

For example, an IPv6 system using CAPA could be configured as follows. For communication between two CAPA domains, use IPv6 and IP in IP tunneling across any IPv4 domain. Use standard IPv6 routing mechanisms and the IPv6 stacks in the hosts. For terminal-initiated (from the inside-realm) communication to the public IPv4 realm, use CAPA and assign IPv4 addresses and sender port numbers centrally to avoid ambiguities and achieve optimum scalability.

For network-initiated traffic (from the outside-realm), use REBEKAH-IP and assign IPv4 addresses to the terminals, thus allowing all forms of push services, notification services and instant messaging services among other services. In the latter case, since the inside-realm host need already be configured with a network address in order to accept incoming connection requests, the overall gateway resource manager also needs a mechanism by which inside-realm hosts are allowed to request only an IP address from the gateway resource manager.

Communication from hosts with unique public IPv4 addresses are not subject to address ambiguities since the sender port will never be the same for two concurrent flows from the same host. Furthermore, there is no chance of address ambiguities from hosts behind various forms of NATs either, since when using these schemes either the sender IP address, port number or address/port number will be unique.

### Implementation examples

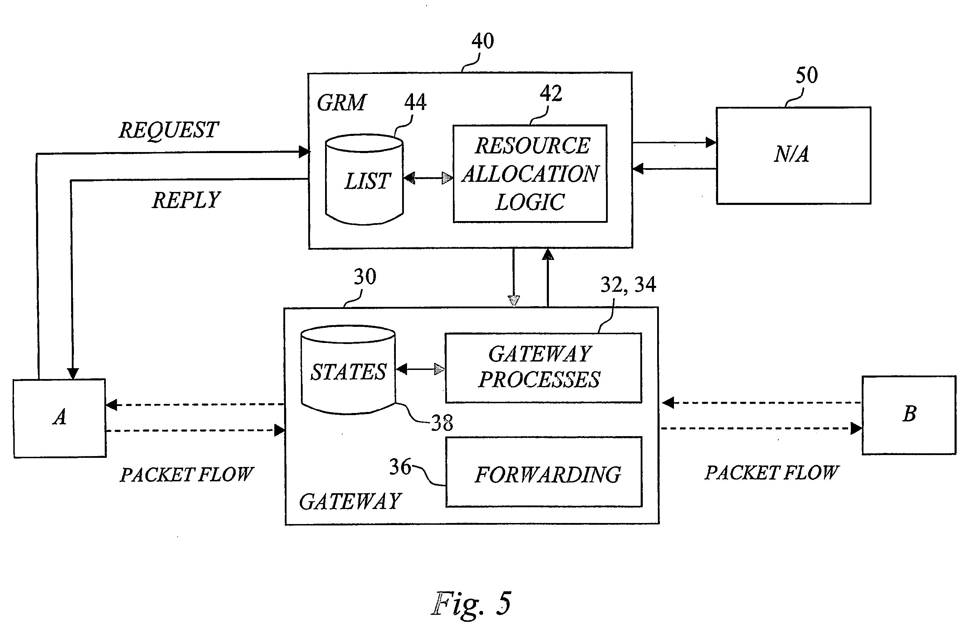

Fig. 5 is a schematic block diagram illustrating an example of a system implementation according to a particular embodiment of the invention. The inside-realm node A, such as a communication terminal, is generally arranged for communication with any of a number of outside-realm nodes. The inside-realm node A requests configuration from the central gateway system, and more particularly from the gateway resource manager (GRM) 40. In this example, the configuration request includes a destination node identifier, such as a FQDN, as well as a well-known destination port number. The request is received by the gateway resource manager 40, which sends a query including the destination node identifier to a name-to-address (N/A) translator 50 such as a DNS server. The N/A-translator 50 determines the network address of the destination node B and returns this address information to the gateway resource manager 40. The gateway resource manager 40 now has information on both destination address and destination port, and resource allocation logic 42 within the resource manager uniquely allocates an outside-realm address and a source port number for the inside-realm node A. The resource manager 40 sends the allocated socket address and port number, preferably together with the retrieved network address of the destination node, back to the requesting node A in a configuration reply. The gateway resource manager 40 also initiates establishment of the connection by means of suitable signaling with the gateway 30.

As previously mentioned, the basic gateway functions in the gateway 30 are supported by the outside-bound and inside-bound processes 32, 34 and the packet-forwarding element 36. The gateway connection states of the gateway 30 may be implemented in a state database 38 that operates as the gateway routing table.

The above process of increasing the multiplexing characteristics of the gateway by central and intelligent allocation of socket address and source port number may be based on a comparison in relation to existing gateway connection states. Referring to the simplified block diagram of Fig. 5, this comparison could be performed by the gateway resource manager 40 directly in relation to the gateway 30, requesting and extracting the relevant gateway states from the state database 38 in the gateway as and when required. However, in order to reduce the signaling between the gateway 30 and the resource manager 40, the analysis is preferably performed in relation to one or more separate list representations of the relevant gateway connection states. Such list representations 42 are conveniently maintained in the resource manager 40, or at an external location that makes it possible for resource allocation logic 44 in the resource manager to effectively access the information.

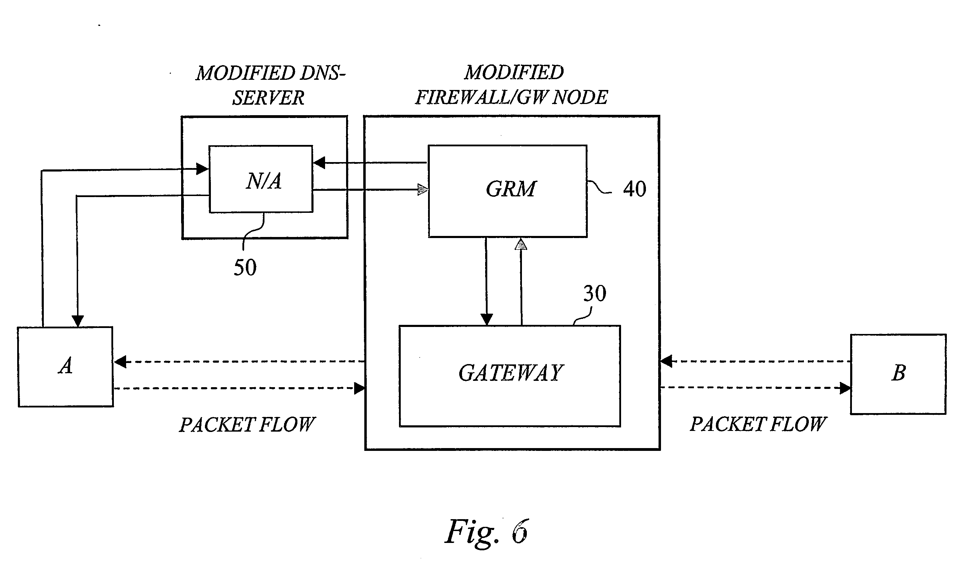

Fig. 6 is a schematic block diagram illustrating an example of a general system implementation according to another particular embodiment of the invention. In this example, the inside-realm node sends a configuration request including a destination node port number and a destination node identifier such as the FQDN directly to the N/A-translator 50, which after proper determination of the destination node network address forwards the configuration request to the gateway resource manager 40. In the system implementation of Fig. 6, the gateway 30 and the gateway resource manager 40 are implemented together in a modified firewall/gateway node, and the N/A-translator 50 is implemented as modified DNS server. This means that the gateway resource manager is co-located with the gateway 30, and perhaps even integrated in the gateway.

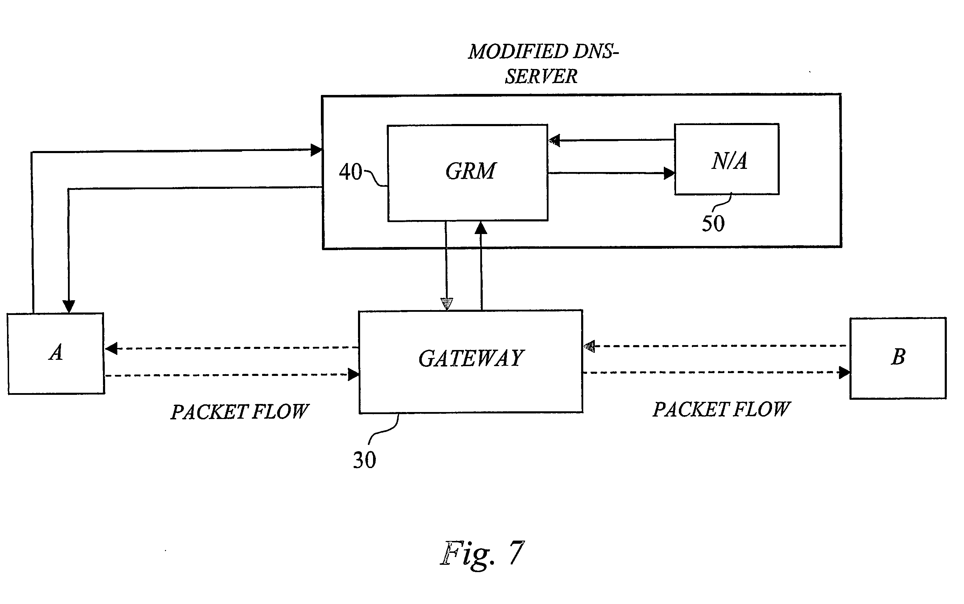

Fig. 7 is a schematic block diagram illustrating an example of a general system implementation according to yet another particular embodiment of the invention. In this example, the gateway resource manager 40 and the N/A-translator 50 are implemented in a modified DNS-server.

It should be clear that the way the configuration request is transferred to the gateway resource manager (directly, via the gateway and/or DNS-server, and so forth) is not critical, as long as the central gateway resource manager eventually receives the connection information required for identifying a unique combination of socket parameters. The same applies to the configuration reply, as long as the relevant socket parameters are eventually transferred to the requesting inside-realm node. Among other things, the way in which the invention is embodied depends on other system design criteria such as the sequence of steps for opening sockets in a particular programming API. Therefore, the client configuration can be co-located with the name resolution step (DNS lookup) or separated completely.

It should also be understood from the above examples that the management and allocation functions in the overall gateway system may be implemented in one or more processes, running on a single node or physically separated into several nodes. For example, the gateway and the associated resource manager may be separated or co-located, all depending on the particular system design specifications. The gateway resource manager function and the associated DNS function may be implemented in separate nodes, or alternatively implemented together, for example in a modified DNS-server.

In general, the gateway resource manager may be implemented as software, hardware, firmware or any combination thereof. In the case of a software-implementation, the steps, functions and actions related to the resource manager are mapped into a computer program, which when being executed by a computer or equivalent processing system effectuates the relevant resource allocation.

### Example of more detailed system implementation

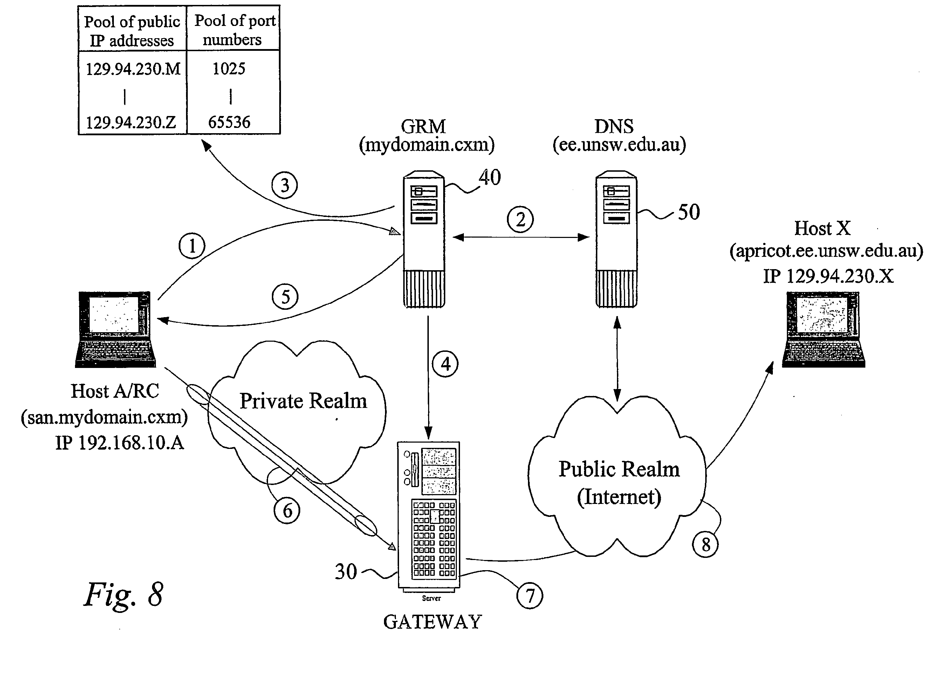

Fig. 8 is a schematic diagram illustrating a more detailed example of a system implementation according to a preferred embodiment of the invention. In this particular example, the overall management functions are implemented as two separate processes that are physically separated into two servers and/or nodes, the gateway resource manager (GRM) 40 and a DNS server 50 or similar identifier-to-address translator. It is also assumed that a private-realm host or terminal wants to connect to a host in the public realm such as the Internet. The communication terminal could be any suitable terminal including user terminals such as modem mobile phones, personal computers, communicators, personal digital assistants and so forth, but also including terminals in base stations, mobile switching centers and other network nodes.

### Terminal implementation

It has turned out to be advantageous to define a new CAPA specific DNS record type, which is utilized for conveying the socket parameters to the terminals during configuration. Alternatively, however, for minimizing the impact on the terminals an existing record type such as the SRV record [9] could be used. However, in this latter case, it is important to stress that the SRV record is an existing record type that has a purpose other than use with CAPA. There is a possibility that using an existing record such as the SRV record can create problems when terminals interpret the data wrongly or DNS servers use the SRV record in a different way. This problem could be reduced by defining a field in the SRV record type that clearly distinguishes the usage of the record for CAPA signaling, in effect temporarily making it a CAPA specific record. It should also be stressed that the implementation of the returned DNS record as the signaling method is not by any means the only way CAPA signaling can be realized. It is possible to use modified RSIP signaling or any other signaling protocol/mechanism to obtain the configuration parameters. In fact, this is very much an issue for implementing CAPA in specific environments where the signaling can be piggybacked on other signaling, thus reducing overall call setup latency or obtaining other advantages.

Naturally, every practical implementation has to be customized and optimized with respect to system specific circumstances and design criteria.

The query to the GRM/DNS from the private terminal may then request the CAPA record type. In the returned record there will eventually be fields that identify which source IP address and port number to use, as well as information on the destination address.

The following is an example output from the DNS using a new CAPA record as well as A record information when the terminal wants to contact host apricot.ee.unsw.edu.au:

| | | | | |
|---|---|---|---|---|
| Trying "apricot.ee.unsw.edu.au" | | | | |
| ;; ->>HEADER<<- opcode: QUERY, status: NOERROR, id: 22135 | | | | |
| ;; flags: qr aa rd ra; QUERY: 1, ANSWER: 1, AUTHORITY: 1, ADDITIONAL: 3 | | | | |

| ;; QUESTION SECTION: | | | | |
|---|---|---|---|---|
| ;apricot.ee.unsw.edu.au. | | IN | CAPA | |
| | | | | |

| ;; ANSWER SECTION: | | | | |
|---|---|---|---|---|
| apricot.ee.unsw.edu.au. | 86400 | IN | CAPA | 0 0 8500 129.94.230.85 |
| | | | | |

| ;; AUTHORITY SECTION: | | | | |
|---|---|---|---|---|
| ee.unsw.edu.au. | 86400 | IN | NS | cool.mydomain.cxm. |
| | | | | |

| ;; ADDITIONAL SECTION: | | | | |
|---|---|---|---|---|
| apricot.ee.unsw.edu.au. | 86400 | IN | A | 129.94.230.79 |
| cool.mydomain.cxm. | 86400 | IN | A | 129.94.230.90 |
| cool.mydomain.cxm. | 86400 | IN | A | 192.168.10.2 |

This reply is interpreted by the resolver as "configure your interface with the IP address 129.94.230.85 and use port number 8500 for the opened socket. The IP address of the remote host (apricot) is 129.94.230.79".

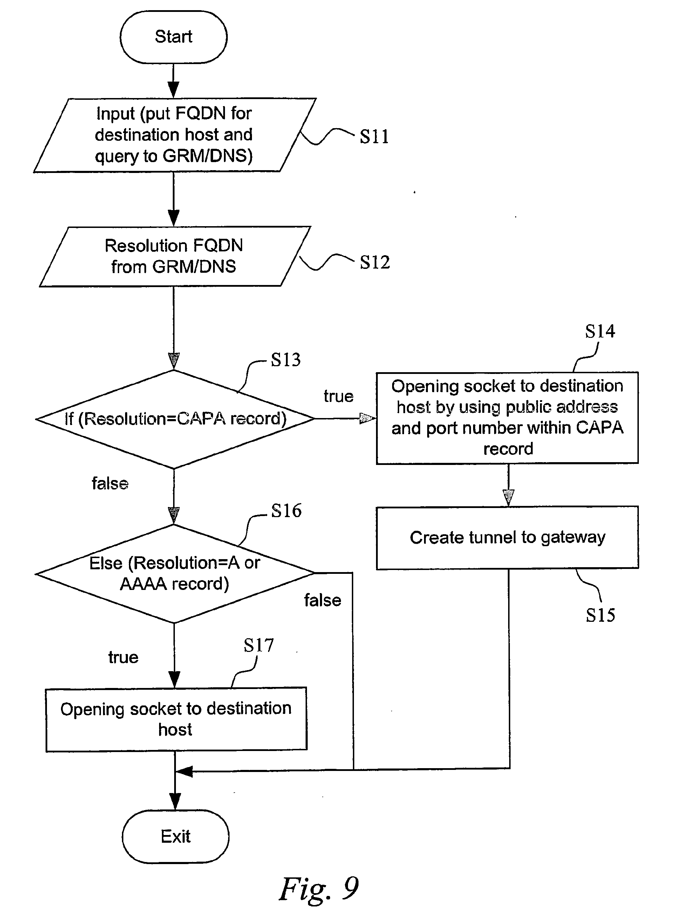

An exemplary process flow for an inside-realm host/terminal is shown in the schematic flow diagram of Fig. 9. In step S11, a query to the GRM/DNS is prepared, including the FQDN or similar identifier of the destination host. A reply from the GRM/DNS is received in step S12. In step S13, it is investigated whether the resolution is a CAPA record. If true, the inside-realm terminal reads the parameters to use for the communication from the CAPA record in the DNS reply, configures its IP address according to the record and opens a socket using the returned source port number, as indicated in step S 14. Once the terminal has been configured, it signals the server and sets up an IP tunnel through the private domain, as indicated in step S15. If the resolution is not a CAPA record (false), it is checked if the resolution is a standard A or AAAA record in step S16. If true, a socket to the destination host is opened in the usual conventional way in step S 17.

In this particular implementation the interaction between terminal and server utilizes the standard DNS function rather than introducing explicit signaling.

The selected illustrative method requires only moderate changes to the terminal since the only hard demand is that the DNS resolver (an application that queries DNS) can ask for and understand CAPA records in addition to the usual A or AAAA records. The acquiring of the sender IP address and port number can also be implemented using explicit signaling with the GRM. When using explicit signaling, it is possible to implement the information retrieval either by modifying the resolver or by modifying the socket API implementation to include the signaling phase when applications open up sockets. However, such a way of implementation would have a larger impact on the terminals since the operating system would require substantial changes.

### Gateway resource manager implementation

An exemplary implementation of the gateway resource manager, which may also be referred to as a process-addressing manager, is based on a standard implementation of DNS with extensions to manage the dynamic address and port assignments and the signaling with the gateway. In an exemplary implementation, the gateway uses standard layer three and/or four switching functions for mapping the addresses and port numbers to tunnels.

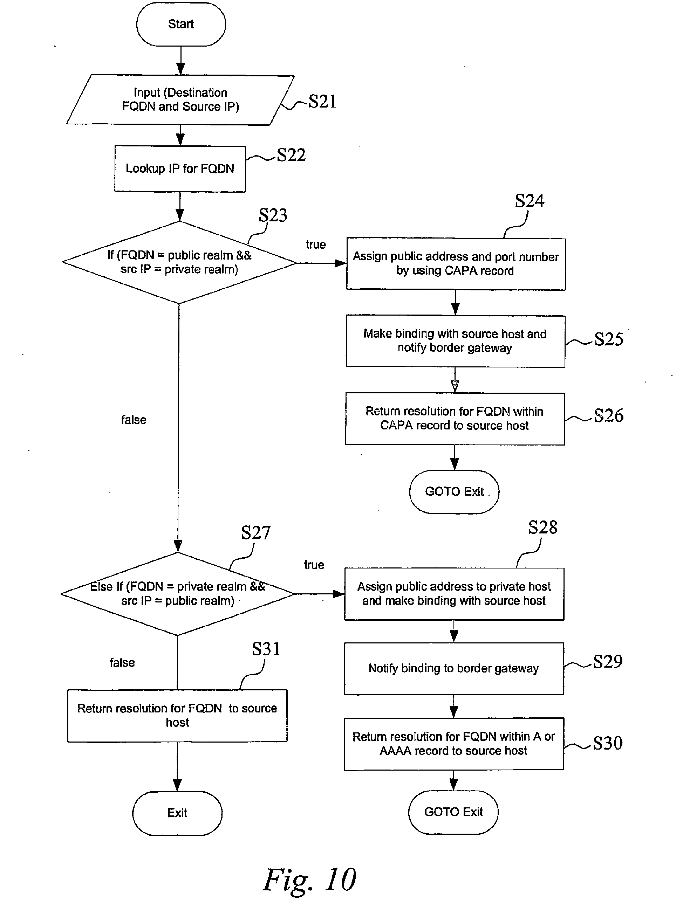

An example of a decision process in the gateway resource manager is shown in the schematic flow diagram of Fig. 10.

In step S21, the gateway resource manager receives a destination FQDN and a source IP address. The resource manager utilizes DNS functionality for a DNS lookup to obtain the destination IP address that corresponds to the FQDN, as indicated in step S22. For example, the DNS functionality could be integrated in the gateway resource manager or provided in the form of a separate DNS server with which the resource manager communicates to obtain the destination IP address. Upon a query, the resource manager determines if the query came from within the private domain or from the public domain, as indicated in steps S23/S27. In step S23, it is investigated if the request originates from the private realm. If true, the next step S24 is to assign an address and also a port number to use for the private host/terminal. The selection process can be implemented using a number of different algorithms for optimization of speed and so forth. In the exemplary implementation we opted for a rotating IP address list and the first free port number as follows:

If the private host has already been assigned an IP address, use it. Else, select first IP address from list, and move that address to end of list so that it is not selected again until all other IP addresses in list have been selected once. This spreads the assignment of IP addresses evenly over the available range. Secondly, select first unused port number for the selected IP address. If no free port number is available, repeat with next address in list.

The next step S25 is to inform the border gateway of the selected combination of source and destination IP addresses and the corresponding private address so the gateway can update its routing table with a mapping to the correct tunnel. This process can also be implemented in several ways, using different algorithms depending on optimization for hardware and so forth.

In this example implementation we do not actually update the routing table until the terminal has been properly configured, the corresponding point-to-point interface in the private realm has been established, and the first packet is received by the gateway. Instead we use a separate list for pending connections (with partially complete connection states) until a tunnel has been established and the source and destination ports are signaled in the packet flow.

Next, in step S26, the resource manager returns the record to the querying source host/terminal, and the combination of known parameters (socket addresses and ports) is marked as occupied.

When the first datagram/packet belonging to the session arrives at the border gateway the outstanding parameter(s) will be identified and the combination of all four (sender and receiver address and port numbers) will be uniquely mapped to the associated tunnel.

If it is determined, in step S23, that the request does not originate from the private realm (false), the flow proceeds with step S27. In step S27, it is investigated whether the request originates from the public realm and the destination terminal is within the private realm. If true, a public address for representing the private destination terminal is assigned in step S28, and a binding is made with the public source host. The next step S29 is to notify the gateway of the binding. In step S30, the resource manager returns the record to the querying public source host.

Step S31 represents a standard DNS situation with a regular DNS lookup and reply, when a private terminal wants to communicate with another private terminal.

In short, steps S24-26 correspond to the CAPA mechanism, whereas steps S28-30 more or less correspond to the REBEKAH-IP mechanism.

If the query originated from the public realm (e.g. Internet), the combination of sender address and port number *will* be unique and if originated from the private realm, the parameter selection process explained above *will also* have made the combination unique so the gateway can easily identify the new flow.

During the remainder of the session, the border gateway will read the combination of sender and receiver addresses and port numbers and base its routing on this combination for traffic coming from the public domain. Traffic from the private domain will simply be forwarded according to standard IP forwarding mechanisms.

With reference once again to Fig. 8, the overall process in an exemplary system implementation can be summarized as follows:
1. The private host sends a configuration request including a FQDN together with destination port information (e.g. a well-known port) to the gateway resource manager (GRM) 40.
2. The gateway resource manager 40 contacts the DNS-server 50, which looks up the IP address corresponding to the FQDN of the sought destination host and returns a conventional A or AAAA record to the gateway resource manager 40.
3. The gateway resource manager 40 assigns a public IP address from the pool of public IP addresses allocated to the gateway, and a port number from the corresponding pool of port numbers based on the destination IP address and destination port number. Preferably, the DNS is subsequently informed of the binding between FQDN and the assigned public IP address.
4. Notify the gateway of the selected/known combination of socket parameters in a request for establishing a gateway connection state.
5. Inform the private host/terminal of assigned public IP address, source port number and IP address for FQDN in CAPA record (possibly in combination with A record) to enable proper configuration of the communication interface of the terminal.
6. Create a tunnel between the private terminal and the gateway through the private realm. In fact, any mechanism for enabling routing of packets between the gateway and the terminal will work as long as the routing decisions are made on the private address of the private host.
7. Make a complete binding between source IP address and port number, destination IP address and port number, and the created tunnel.
8. Forward data using IP addresses and ports to tunnel mapping.

The embodiments described above are merely given as examples, and it should be understood that the present invention is not limited thereto. Further modifications, changes and improvements which retain the basic underlying principles disclosed and claimed herein are within the scope of the invention.

### REFERENCES

[1] "IP Network Address Translator (NAT) Terminology and Considerations". P. Srisuresh, M. Holdrege, RFC 2663 of the Internet Engineering Task Force, August 1999.
[2] "Architectural Implications of NAT", T. Hain, RFC 2993 of the Internet Engineering Task Force, November 2000.
[3] "Realm Specific IP: Framework", M. Borella, J. Lo, D. Grabelsky, G. Montenegro, RFC 3102 of the Internet Engineering Task Force, October 2001.
[4] "Realm Specific IP: Protocol Specification", M. Borella, D. Grabelsky, J. Lo, K. Taniguchi, RFC 3103 of the Internet Engineering Task Force, October 2001.
[5] "Expanding the Address space through REBEKAH-IP: An Architectural View", B. Landfeldt, S. Rattananon and A. Seneviratne, ICITA02, Bathurst NSW, November 2002.
[6] "Providing Scalable and Deployable Addressing in Third Generation Cellular Networks", B. Landfeldt, S. Rattananon and A. Seneviratne, IEEE Wireless Communications Magazine, vol. 10, no. 1, pp 36-42, Feb 2003.
[7] "IPv4+4," Zoltán Turányi, András Valkó, 10th International Conference on Network Protocols (ICNP 2002), Paris, November 2002.
[8] http://www.iana.org/numbers.html, printed March 28, 2003.
[9] "A DNS RR for specifying the location of service (DNS SRV)", A. Gulbrandsen, P. Vixie, L. Esibov, IETF RFC 2782, February 2000.

## Claims

1. A method for enabling establishment of a connection between a node (A) of an inside address realm (10) and a node (B) of an outside address realm (20) through an intermediate communication gateway (30) having a pool of outside-realm gateway addresses for outside-realm representation of inside-realm nodes, said method comprising the steps of:
- centrally allocating, in response to a configuration request initiated from said inside-realm node (A), an outside-realm gateway address from said pool of gateway addresses and an inside node port number for said inside-realm node,
wherein said step of centrally allocating comprises the step of identifying, based on predetermined connection information derivable from said configuration request, an outside-realm gateway address and an inside node port number that in combination with said predetermined connection information define a set of socket parameters, referring to the part of the gateway state representation related to the outside-realm, that has no counterpart in any existing gateway connection state;
- initiating establishment of said connection at least partly based on the allocated outside-realm gateway address and inside node port number; and
- transmitting the allocated outside-realm gateway address and inside node port number to the requesting inside-realm node (A) in a configuration reply.

2. The method according to claim 1, wherein said predetermined connection information includes at least one of outside node address information and outside node port information.

3. The method according to claim 1, wherein a gateway connection state is established in said gateway (30) based on said outside-realm gateway state representation and a representation of an inside-realm routing path between said gateway (30) and said inside-realm node (A).

4. The method according to claim 1, wherein the allocated outside-realm gateway address and inside node port number are represented by an allocated socket network address and a source port number, and the predetermined connection information includes a destination network address and a destination port number, and the outside-realm gateway state representation is defined by a unique set of socket parameters including the allocated socket network address and source port number, the destination network address and the destination port number.

5. The method according to claim 1, wherein said configuration reply is a DNS (Domain Name Server) reply.

6. The method according to claim 5, wherein said allocated outside-realm gateway address and inside node port number are conveyed in a dedicated DNS record in said DNS reply.

7. The method according to claim 1, further comprising the step of said inside-realm node configuring a communication interface according to said allocated outside-realm gateway address and inside node port number.

8. The method according to claim 1, further comprising the step of establishing an inside-realm routing path between said gateway (30) and said inside-realm node (A).

9. A system for enabling establishment of a connection between a node (A) of an inside address realm (10) and a node (B) of an outside address realm (20) through an intermediate communication gateway (30) having a pool of outside-realm gateway addresses for outside-realm representation of inside-realm nodes, said system comprising:
- means (42) for centrally allocating, in response to a configuration request initiated from said inside-realm node (A), an outside-realm gateway address from said pool of gateway addresses and an inside node port number for said inside-realm node,
wherein said means (42) for centrally allocating comprises means for identifying, based on predetermined connection information derivable from said configuration request, an outside-realm gateway address and an inside node port number that in combination with said predetermined connection information define a set of socket parameters, referring to the part of the gateway state representation related to the outside-realm, that has no counterpart in any existing gateway connection state;
- means (40) for initiating establishment of said connection at least partly based on the allocated outside-realm gateway address and inside node port number; and
- means (40) for transmitting the allocated outside-realm gateway address and inside node port number to the requesting inside-realm node in a configuration reply.

10. The system according to claim 9, wherein said predetermined connection information includes at least one of outside node address information and outside node port information.

11. The system according to claim 9, wherein a gateway connection state is established in said gateway (30) based on said outside-realm gateway state representation and a representation of an inside-realm routing path between said gateway and said inside-realm node (A).

12. The system according to claim 9, wherein the allocated outside-realm gateway address and inside node port number are represented by an allocated socket network address and a source port number, and the predetermined connection information includes a destination network address and a destination port number, and the outside-realm gateway state representation is defined by a unique set of socket parameters including the allocated socket network address and source port number, the destination network address and the destination port number.

13. The system according to claim 9, wherein said configuration reply is a DNS (Domain Name Server) reply.

14. The system according to claim 13, wherein said allocated outside-realm gateway address and inside node port number are conveyed in a dedicated DNS record in said DNS reply.

15. The system according to claim 9, further comprising means for establishing an inside-realm routing path between said gateway and said inside-realm node.

16. A gateway resource manager (40) for a communication gateway (30), said communication gateway (30) having a pool of outside-realm gateway addresses for outside-realm representation of inside-realm nodes, said gateway resource manager (40) comprising:
- means (42) for allocating an outside-realm gateway address from said pool of gateway addresses and an inside node port number to be used in establishing a gateway connection state for a flow between an inside-realm node (A) and an outside-realm node (B),
wherein said allocating means (42) comprises means for identifying, based on predetermined connection information, an outside-realm gateway address and an inside node port number that in combination with said predetermined connection information define a set of socket parameters, referring to the part of the gateway state representation related to the outside-realm, that has no counterpart in any existing gateway connection state;
- means (40) for initiating establishment of said gateway connection state at least partly based on the allocated outside-realm gateway address and inside node port number; and
- means (40) for transmitting the allocated outside-realm gateway address and inside node port number to said inside-realm node.

17. The gateway resource manager according to claim 16, wherein said predetermined connection information includes at least one of outside node address information and outside node port information.

18. The gateway resource manager according to claim 16, wherein the allocated outside-realm gateway address and inside node port number are represented by an allocated socket network address and a source port number, and the predetermined connection information includes a destination network address and a destination port number, and the outside-realm gateway state representation is defined by a unique set of socket parameters including the allocated socket network address and source port number, the destination network address and the destination port number.

19. The gateway resource manager according to claim 16, wherein said means (40) for initiating establishment of said gateway connection state comprises means for requesting that said gateway (30) establishes a gateway connection state based on said outside-realm gateway state representation and a representation of an inside-realm routing path between said gateway and said inside-realm node.

20. The gateway resource manager according to claim 16, wherein said allocating means (42) performs allocation in response to a configuration request initiated from said inside-realm node (A), and said transmitting means (40) transmits the allocated outside-realm gateway address and inside node port number to said inside-realm node (A) in a configuration reply.

21. The gateway resource manager according to claim 20, wherein said configuration reply is a DNS (Domain Name Server) reply.

22. The gateway resource manager according to claim 21, wherein said allocated outside-realm gateway address and inside node port number are conveyed in a dedicated DNS record in said DNS reply.

23. A method of configuring an inside-realm communication node (A) for communication with an outside-realm communication node (B) via a communication gateway (30) having a pool of outside-realm gateway addresses for outside-realm representation of inside-realm nodes, said method comprising the steps of:
- centrally allocating an outside-realm gateway address from said pool of gateway addresses and an inside node port number for said inside-realm node (A),
wherein said step of centrally allocating comprises the step of identifying, based on predetermined connection information, an outside-realm gateway address and an inside node port number that in combination with said predetermined connection information define a set of socket parameters, referring to the part of the gateway state representation related to the outside-realm, that has no counterpart in any existing gateway connection state;
- transmitting the allocated outside-realm gateway address and inside node port number to said inside-realm node (A); and
- configuring said inside-realm communication node (A) according to the allocated outside-realm gateway address and inside node port number.

## Patentansprüche

1. Verfahren zum Ermöglichen einer Herstellung einer Verbindung zwischen einem Knoten (A) eines Innenadressbereiches (10) und einem Knoten (B) eines Außenadressbereiches (20) über ein
Zwischenkommunikations-Gateway (30) mit einem Pool von Außenbereichs-Gatewayadressen zur Außenbereichsdarstellung von Innenbereichsknoten, wobei das Verfahren die Schritte umfasst:
- zentrales Allozieren in Reaktion auf eine Konfigurationsanfrage, die von dem Innenbereichsknoten (A) initiiert wird, einer Außenbereichs-Gatewayadresse aus dem Pool von Gatewayadressen und einer Innenknoten-Portnummer für den Innenbereichsknoten,
wobei der Schritt eines zentralen Allozierens den Schritt eines Identifizierens umfasst, basierend auf einer vorbestimmten Verbindungsinformation, die aus der Konfigurationsanfrage ableitbar ist, einer Außenbereichs-Gatewayadresse und einer Innenknoten-Portnummer, die in Kombination mit der vorbestimmten Verbindungsinformation einen Satz von Sockelparametern definieren, der sich auf den Teil der Gateway-Zustandsdarstellung bezieht, die sich auf den Außenbereich bezieht, die kein Gegenstück in irgendeinem existierenden Gateway-Verbindungszustand besitzt;
- Initiieren einer Herstellung der Verbindung zumindest teilweise basierend auf der allozierten Außenbereichs-Gatewayadresse und der Innenknoten-Portnummer; und
- Übertragen der allozierten Außenbereichs-Gatewayadresse und Innenknoten-Portnummer zu dem anfragenden Innenbereichsknoten (A) in einer Konfigurationsantwort.

2. Verfahren nach Anspruch 1, wobei die vorbestimmte Verbindungsinformation zumindest eines aus einer Außenknoten-Adressinformation und einer Außenknoten-Portinformation umfasst.

3. Verfahren nach Anspruch 1, wobei ein Gateway-Verbindungszustand in dem Gateway (30) basierend auf der Außenbereichs-Gateway-Zustandsdarstellung und einer Darstellung eines Innenbereichs-Weiterleitungspfades zwischen dem Gateway (30) und dem Innenbereichsknoten (A) hergestellt wird.

4. Verfahren nach Anspruch 1, wobei die allozierte Außenbereichs-Gatewayadresse und Innenknoten-Portnummer durch eine allozierte Sockel-Netzwerkadresse und eine Quellportnummer dargestellt werden und die vorbestimmte Verbindungsinformation eine Zielnetzwerkadresse und eine Zielportnummer einschließt und die Außenbereichs-Gateway-Zustandsdarstellung durch einen eindeutigen Satz von Sockelparametern definiert wird, die die allozierte Sockel-Netzwerkadresse und eine Quellportnummer einschließen, die Zielnetzwerkadresse und die Zielportnummer.

5. Verfahren nach Anspruch 1, wobei die Konfigurationsantwort eine DNS-Antwort (DNS - Domain Name Server) ist.

6. Verfahren nach Anspruch 5, wobei die allozierte Außenbereichs-Gatewayadresse und Innenknoten-Portnummer in einem dedizierten DNS-Satz in der DNS-Antwort übermittelt werden.

7. Verfahren nach Anspruch 1, weiter mit dem Schritt des Innenbereichs-Knotens eines Konfigurierens einer Kommunikationsschnittstelle gemäß der allozierten Außenbereichs-Gatewayadresse und Innenknoten-Portnummer.

8. Verfahren nach Anspruch 1, weiter mit dem Schritt eines Herstellens eines Innenbereichs-Weiterleitungspfades zwischen dem Gateway (30) und dem Innenbereichsknoten (A).

9. System zum Ermöglichen einer Herstellung einer Verbindung zwischen einem Knoten (A) eines Innenadressbereiches (10) und einem Knoten (B) eines Außenadressbereiches (20) über ein
Zwischenkommunikations-Gateway (30) mit einem Pool von Außenbereichs-Gatewayadressen zur Außenbereichsdarstellung von Innenbereichsknoten, wobei das System umfasst:
- eine Vorrichtung (42) zum zentralen Allozieren in Reaktion auf eine Konfigurationsanfrage, die von dem Innenbereichsknoten (A) initiiert wird, einer Außenbereichs-Gatewayadresse aus dem Pool von Gatewayadressen und einer Innenknoten-Portnummer für den Innenbereichsknoten,
wobei die Vorrichtung (42) zum zentralen Allozieren eine Vorrichtung zum Identifizieren umfasst, basierend auf einer vorbestimmten Verbindungsinformation, die aus der Konfigurationsanfrage ableitbar ist, einer Außenbereichs-Gatewayadresse und einer Innenknoten-Portnummer, die in Kombination mit der vorbestimmten Verbindungsinformation einen Satz von Sockelparametern definieren, der sich auf den Teil der Gateway-Zustandsdarstellung bezieht, die sich auf den Außenbereich bezieht, die kein Gegenstück in irgendeinem existierenden Gateway-Verbindungszustand besitzt;
- eine Vorrichtung (40) zum Initiieren einer Herstellung der Verbindung zumindest teilweise basierend auf der allozierten Außenbereichs-Gatewayadresse und der Innenknoten-Portnummer; und
- eine Vorrichtung (40) zum Übertragen der allozierten Außenbereichs-Gatewayadresse und Innenknoten-Portnummer zu dem anfragenden Innenbereichsknoten (A) in einer Konfigurationsantwort.

10. System nach Anspruch 9, wobei die vorbestimmte Verbindungsinformation zumindest eines aus einer Außenknoten-Adressinformation und einer Außenknoten-Portinformation umfasst.

11. System nach Anspruch 9, wobei ein Gateway-Verbindungszustand in dem Gateway (30) basierend auf der Außenbereichs-Gateway-Zustandsdarstellung und einer Darstellung eines Innenbereichs-Weiterleitungspfades zwischen dem Gateway (30) und dem Innenbereichsknoten (A) hergestellt wird.

12. System nach Anspruch 9, wobei die allozierte Außenbereichs-Gatewayadresse und Innenknoten-Portnummer durch eine allozierte Sockel-Netzwerkadresse und eine Quellportnummer dargestellt werden und die vorbestimmte Verbindungsinformation eine Zielnetzwerkadresse und eine Zielportnummer einschließt und die Außenbereichs-Gateway-Zustandsdarstellung durch einen eindeutigen Satz von Sockelparametern definiert wird, die die allozierte Sockel-Netzwerkadresse und eine Quellportnummer einschließen, die Zielnetzwerkadresse und die Zielportnummer.

13. System nach Anspruch 9, wobei die Konfigurationsantwort eine DNS-Antwort (DNS - Domain Name Server) ist.

14. System nach Anspruch 13, wobei die allozierte Außenbereichs-Gatewayadresse und Innenknoten-Portnummer in einem dedizierten DNS-Satz in der DNS-Antwort übermittelt werden.

15. System nach Anspruch 9, weiter mit einer Vorrichtung zum Herstellen eines Innenbereichs-Weiterleitungspfades zwischen dem Gateway (30) und dem Innenbereichsknoten (A).

16. Gateway-Ressourcen-Manager (40) für ein Kommunikations-Gateway(30), wobei das Kommunikations-Gateway (30) einen Pool von Außenbereichs-Gatewayadressen zur Außenbereichsdarstellung von Innenbereichsknoten aufweist, wobei der Gateway-Ressourcen-Manager (40) umfasst:
- eine Vorrichtung (42) zum zentralen Allozieren in Reaktion auf eine Konfigurationsanfrage, die von dem Innenbereichsknoten (A) initiiert wird, einer Außenbereichs-Gatewayadresse aus dem Pool von Gatewayadressen und einer Innenknoten-Portnummer für den Innenbereichsknoten,
wobei die Vorrichtung (42) zum zentralen Allozieren eine Vorrichtung zum Identifizieren umfasst, basierend auf einer vorbestimmten Verbindungsinformation, die aus der Konfigurationsanfrage ableitbar ist, einer Außenbereichs-Gatewayadresse und einer Innenknoten-Portnummer, die in Kombination mit der vorbestimmten Verbindungsinformation einen Satz von Sockelparametern definieren, der sich auf den Teil der Gateway-Zustandsdarstellung bezieht, die sich auf den Außenbereich bezieht, die kein Gegenstück in irgendeinem existierenden Gateway-Verbindungszustand besitzt;
- eine Vorrichtung (40) zum Initiieren einer Herstellung der Verbindung zumindest teilweise basierend auf der allozierten Außenbereichs-Gatewayadresse und der Innenknoten-Portnummer; und
- eine Vorrichtung (40) zum Übertragen der allozierten Außenbereichs-Gatewayadresse und Innenknoten-Portnummer zu dem anfragenden Innenbereichsknoten (A) in einer Konfigurationsantwort.

17. Gateway-Ressourcen-Manager nach Anspruch 16, wobei die vorbestimmte Verbindungsinformation zumindest eines aus einer Außenknoten-Adressinformation und einer Außenknoten-Portinformation umfasst.

18. Gateway-Ressourcen-Manager nach Anspruch 16, wobei die allozierte Außenbereichs-Gatewayadresse und Innenknoten-Portnummer durch eine allozierte Sockel-Netzwerkadresse und eine Quellportnummer dargestellt werden und die vorbestimmte Verbindungsinformation eine Zielnetzwerkadresse und eine Zielportnummer einschließt und die Außenbereichs-Gateway-Zustandsdarstellung durch einen eindeutigen Satz von Sockelparametern definiert wird, die die allozierte Sockel-Netzwerkadresse und eine Quellportnummer einschließen, die Zielnetzwerkadresse und die Zielportnummer.

19. Gateway-Ressourcen-Manager nach Anspruch 16, wobei die Vorrichtung zum Initiieren einer Herstellung des Gateway-Verbindungszustand eine Vorrichtung zum Anfordern umfasst, dass das Gateway (30) einen Gateway-Verbindungszustand basierend auf der Außenbereichs-Gateway-Zustandsdarstellung und einer Darstellung eines Innenbereichs-Weiterleitungspfades zwischen dem Gateway (30) und dem Innenbereichsknoten (A) hergestellt.

20. Gateway-Ressourcen-Manager nach Anspruch 16, wobei die allozierende Vorrichtung (42) eine Allokation in Reaktion auf eine Konfigurationsanfrage durchführt, die von dem Innenbereichsknoten (A) initiiert wird und die übertragende Vorrichtung (40) die allozierte Außenbereichs-Gatewayadresse und Innenknoten-Portnummer zu dem Innenbereichsknoten (A) in einer Konfigurationsantwort überträgt.

21. Gateway-Ressourcen-Manager nach Anspruch 20, wobei die Konfigurationsantwort eine DNS-Antwort (DNS - Domain Name Server) ist.

22. Gateway-Ressourcen-Manager nach Anspruch 21, wobei die allozierte Außenbereichs-Gatewayadresse und Innenknoten-Portnummer in einem dedizierten DNS-Satz in der DNS-Antwort übermittelt werden.

23. Verfahren eines Konfigurierens eines Innenbereichs-Kommunikationsknotens (A) zur Kommunikation mit einem Außenbereichs-Kommunikationsknoten (B) über ein Kommunikationsgateway (30) mit einem Pool von Außenbereichs-Gatewayadressen zur Außenbereichsdarstellung von Innenbereichsknoten, wobei das Verfahren die Schritte umfasst:
- zentrales Allozieren einer Außenbereichs-Gatewayadresse aus dem Pool von Gatewayadressen und einer Innenknoten-Portnummer für den Innenbereichsknoten (A),
wobei der Schritt eines zentralen Allozierens den Schritt eines Identifizierens umfasst, basierend auf einer vorbestimmten Verbindungsinformation, die aus der Konfigurationsanfrage ableitbar ist, einer Außenbereichs-Gatewayadresse und einer Innenknoten-Portnummer, die in Kombination mit der vorbestimmten Verbindungsinformation einen Satz von Sockelparametern definieren, der sich auf den Teil der Gateway-Zustandsdarstellung bezieht, die sich auf den Außenbereich bezieht, die kein Gegenstück in irgendeinem existierenden Gateway-Verbindungszustand besitzt;
- Übertragen der allozierten Außenbereichs-Gatewayadresse und Innenknoten-Portnummer zu dem anfragenden Innenbereichsknoten (A); und
- Konfigurieren des Innenbereichs-Kommunikationsknoten (A) gemäß der allozierten Außenbereichs-Gatewayadresse und Innenknoten-Portnummer.

## Revendications

1. Procédé pour permettre l'établissement d'une connexion entre un noeud (A) d'un domaine intérieur (10) d'adresses et un noeud (B) d'un domaine extérieur (20) d'adresses au moyen d'une passerelle intermédiaire (30) de communication comportant un pool d'adresses de passerelle de domaine extérieur pour représentation dans le domaine extérieur de noeuds du domaine intérieur, ledit procédé comprenant les étapes :
- d'attribution de manière centrale, en réponse à une demande de configuration lancée par ledit noeud (A) de domaine intérieur, d'une adresse de passerelle de domaine extérieur provenant dudit pool d'adresses de passerelle et d'un numéro de port de noeud intérieur pour ledit noeud de domaine intérieur,
dans lequel ladite étape d'attribution de manière centrale comprend l'étape d'identification, en se basant sur une information prédéterminée de connexion pouvant être obtenue de ladite demande de configuration, d'une adresse de passerelle de domaine extérieur et d'un numéro de port de noeud intérieur qui, en combinaison avec ladite information prédéterminée de connexion, définissent un ensemble de paramètres de point d'accès, se référant à la partie de la représentation d'état de passerelle relative au domaine extérieur, qui n'a d'homologue dans aucun état existant de connexion de passerelle ;
- de lancement de l'établissement de ladite connexion en se basant au moins partiellement sur les adresse de passerelle de domaine extérieur et numéro de port de noeud intérieur attribués ; et
- dans une réponse de configuration, de transmission, au noeud (A) demandeur de domaine intérieur, des adresse de passerelle de domaine extérieur et numéro de port de noeud intérieur attribués.

2. Procédé selon la revendication 1, dans lequel ladite information prédéterminée de connexion comprend au moins l'une d'une information d'adresse de noeud extérieur et d'une information de port de noeud extérieur.

3. Procédé selon la revendication 1, dans lequel on établit un état de connexion de passerelle dans ladite passerelle (30) en se basant sur ladite représentation d'état de passerelle de domaine extérieur et une représentation d'un chemin d'acheminement de domaine intérieur entre ladite passerelle (30) et ledit noeud (A) de domaine intérieur.

4. Procédé selon la revendication 1, dans lequel les adresse de passerelle de domaine extérieur et numéro de port de noeud intérieur, attribués, sont représentés par une adresse de réseau de point d'accès attribuée et un numéro de port de source, et l'information prédéterminée de connexion comprend une adresse de réseau de destination et un numéro de port de destination, et la représentation d'état de passerelle de domaine extérieur est définie par un unique ensemble de paramètres de point d'accès incluant les adresse de réseau de point d'accès et numéro de port de source attribués, l'adresse de réseau de destination et le numéro de port de destination.

5. Procédé selon la revendication 1, dans lequel ladite réponse de configuration est une réponse de serveur de noms de domaine (DNS pour "Domain Name Server").

6. Procédé selon la revendication 5, dans lequel lesdits adresse de passerelle de domaine extérieur et numéro de port de noeud intérieur, attribués, sont transportés dans un enregistrement de DNS spécialisé de ladite réponse de DNS.

7. Procédé selon la revendication 1, comprenant en outre l'étape consistant, pour ledit noeud de domaine intérieur, à configurer une interface de communication en fonction desdits adresse de passerelle de domaine extérieur et numéro de port de noeud intérieur attribués.

8. Procédé selon la revendication 1, comprenant en outre l'étape d'établissement d'un chemin d'acheminement de domaine intérieur entre ladite passerelle (30) et ledit noeud (A) de domaine intérieur.

9. Système destiné à permettre l'établissement d'une connexion entre un noeud (A) d'un domaine intérieur (10) d'adresses et un noeud (B) d'un domaine extérieur (20) d'adresses au moyen d'une passerelle intermédiaire (30) de communication comportant un pool d'adresses de passerelle de domaine extérieur pour représentation dans le domaine extérieur de noeuds du domaine intérieur, ledit système comprenant :
- un moyen (42) destiné à attribuer de manière centrale, en réponse à une demande de configuration lancée par ledit noeud (A) de domaine intérieur, une adresse de passerelle de domaine extérieur provenant dudit pool d'adresses de passerelle et un numéro de port de noeud intérieur pour ledit noeud de domaine intérieur,
dans lequel ledit moyen (42) d'attribution de manière centrale comprend un moyen destiné à identifier, en se basant sur une information prédéterminée de connexion pouvant être obtenue de ladite demande de configuration, une adresse de passerelle de domaine extérieur et un numéro de port de noeud intérieur qui, en combinaison avec ladite information prédéterminée de connexion, définissent un ensemble de paramètres de point d'accès, se référant à la partie de la représentation d'état de passerelle relative au domaine extérieur, qui n'a d'homologue dans aucun état existant de connexion de passerelle ;
- un moyen (40) destiné à lancer l'établissement de ladite connexion en se basant au moins partiellement sur les adresse de passerelle de domaine extérieur et numéro de port de noeud intérieur attribués ; et
un moyen (40) destiné à transmettre, dans une réponse de configuration, au noeud demandeur de domaine intérieur, les adresse de passerelle de domaine extérieur et numéro de port de noeud intérieur attribués.

10. Système selon la revendication 9, dans lequel ladite information prédéterminée de connexion comprend au moins l'une d'une information d'adresse de noeud extérieur et d'une information de port de noeud extérieur.

11. Système selon la revendication 9, dans lequel on établit un état de connexion de passerelle dans ladite passerelle (30) en se basant sur ladite représentation d'état de passerelle de domaine extérieur et une représentation d'un chemin d'acheminement de domaine intérieur entre ladite passerelle et ledit noeud (A) de domaine intérieur.

12. Système selon la revendication 9, dans lequel les adresse de passerelle de domaine extérieur et numéro de port de noeud intérieur attribués sont représentés par une adresse de réseau de point d'accès attribuée et un numéro de port de source, et l'information prédéterminée de connexion comprend une adresse de réseau de destination et un numéro de port de destination, et la représentation d'état de passerelle de domaine extérieur est définie par un unique ensemble de paramètres de point d'accès incluant les adresse de réseau de point d'accès et numéro de port de source attribués, l'adresse de réseau de destination et le numéro de port de destination.

13. Système selon la revendication 9, dans lequel ladite réponse de configuration est une réponse de DNS (serveur de noms de domaine).

14. Système selon la revendication 13, dans lequel lesdits adresse de passerelle de domaine extérieur et numéro de port de noeud intérieur attribués sont transportés dans un enregistrement de DNS spécialisé de ladite réponse de DNS.

15. Système selon la revendication 9, comprenant en outre un moyen destiné à établir un chemin d'acheminement de domaine intérieur entre ladite passerelle et ledit noeud de domaine intérieur.

16. Gestionnaire (40) de ressources de passerelle pour une passerelle (30) de communication, ladite passerelle (30) de communication comportant un pool d'adresses de passerelle de domaine extérieur pour représentation dans le domaine extérieur de noeuds du domaine intérieur, ledit gestionnaire (40) de ressources de passerelle comprenant :
- un moyen (42) destiné à attribuer une adresse de passerelle de domaine extérieur provenant dudit pool d'adresses de passerelle et un numéro de port de noeud intérieur à utiliser dans l'établissement d'un état de connexion de passerelle pour un flux entre un noeud (A) de domaine intérieur et un noeud (B) de domaine extérieur,
dans lequel ledit moyen (42) d'attribution comprend un moyen destiné à identifier, en se basant sur une information prédéterminée de connexion, une adresse de passerelle de domaine extérieur et un numéro de port de noeud intérieur qui, en combinaison avec ladite information prédéterminée de connexion, définissent un ensemble de paramètres de point d'accès, se référant à la partie de la représentation d'état de passerelle relative au domaine extérieur, qui n'a d'homologue dans aucun état existant de connexion de passerelle ;
- un moyen (40) destiné à lancer l'établissement dudit état de connexion de passerelle en se basant au moins partiellement sur les adresse de passerelle de domaine extérieur et numéro de port de noeud intérieur attribués ; et
un moyen (40) destiné à transmettre, audit noeud de domaine intérieur, les adresse de passerelle de domaine extérieur et numéro de port de noeud intérieur attribués.

17. Gestionnaire de ressources de passerelle selon la revendication 16, dans lequel ladite information prédéterminée de connexion comprend au moins l'une d'une information d'adresse de noeud extérieur et d'une information de port de noeud extérieur.

18. Gestionnaire de ressources de passerelle selon la revendication 16, dans lequel les adresse de passerelle de domaine extérieur et numéro de port de noeud intérieur attribués sont représentés par une adresse de réseau de point d'accès attribuée et un numéro de port de source, et l'information prédéterminée de connexion comprend une adresse de réseau de destination et un numéro de port de destination, et la représentation d'état de passerelle de domaine extérieur est définie par un unique ensemble de paramètres de point d'accès incluant les adresse de réseau de point d'accès et numéro de port de source attribués, l'adresse de réseau de destination et le numéro de port de destination.

19. Gestionnaire de ressources de passerelle selon la revendication 16, dans lequel ledit moyen (40) destiné à lancer l'établissement dudit état de connexion de passerelle comprend un moyen destiné à demander que ladite passerelle (30) établisse un état de connexion de passerelle en se basant sur ladite représentation d'état de passerelle de domaine extérieur et une représentation d'un chemin d'acheminement de domaine intérieur entre ladite passerelle et ledit noeud de domaine intérieur.

20. Gestionnaire de ressources de passerelle selon la revendication 16, dans lequel ledit moyen (42) d'attribution effectue l'attribution en réponse à une demande de configuration lancée par ledit noeud (A) de domaine intérieur, et ledit moyen (40) de transmission transmet, audit noeud (A) de domaine intérieur, dans une réponse de configuration, les adresse de passerelle de domaine extérieur et numéro de port de noeud intérieur attribués.

21. Gestionnaire de ressources de passerelle selon la revendication 20, dans lequel ladite réponse de configuration est une réponse de DNS (serveur de noms de domaine).

22. Gestionnaire de ressources de passerelle selon la revendication 21, dans lequel lesdits adresse de passerelle de domaine extérieur et numéro de port de noeud intérieur attribués sont transportés dans un enregistrement de DNS spécialisé de ladite réponse de DNS.

23. Procédé de configuration d'un noeud (A) de communication de domaine intérieur pour communication avec un noeud (B) de communication de domaine extérieur via une passerelle (30) de communication comportant un pool d'adresses de passerelle de domaine extérieur pour représentation dans le domaine extérieur de noeuds du domaine intérieur, ledit procédé comprenant les étapes :
- d'attribution de manière centrale d'une adresse de passerelle de domaine extérieur provenant dudit pool d'adresses de passerelle et d'un numéro de port de noeud intérieur pour ledit noeud (A) de domaine intérieur,
dans lequel ladite étape d'attribution de manière centrale comprend l'étape d'identification, en se basant sur une information prédéterminée de connexion, d'une adresse de passerelle de domaine extérieur et d'un numéro de port de noeud intérieur qui, en combinaison avec ladite information prédéterminée de connexion, définissent un ensemble de paramètres de point d'accès, se référant à la partie de la représentation d'état de passerelle relative au domaine extérieur, qui n'a d'homologue dans aucun état existant de connexion de passerelle ;
- de transmission, audit noeud (A) de domaine intérieur, des adresse de passerelle de domaine extérieur et numéro de port de noeud intérieur attribués ; et
- de configuration dudit noeud (A) de communication de domaine intérieur d'après les adresse de passerelle de domaine extérieur et numéro de port de noeud intérieur attribués.
